# EUROPEAN PATENT APPLICATION

(11) **EP 3 229 333 A1**
(43) Date of publication of application: **11.10.2017**
(21) Application number: 15865542.3
(22) Date of filing: 01.12.2015
(51) Int. Cl.: H02J 3/00, G06Q 50/06, H02J 3/14, H02J 3/32, H02J 3/46, H02J 7/00

(54) **ELECTRIC POWER CONTROL SYSTEM, ELECTRIC POWER CONTROL METHOD, AND PROGRAM**

(30) Priority: 02.12.2014 JP 2014243957
(71) Applicant: Sekisui Chemical Co., Ltd., Osaka-shi, Osaka 530-8565 (JP)
(72) Inventor: UENISHI, Akihiro, Tsukuba-shi Ibaraki 300-4292 (JP); MATSUZAKI, Junichi, Tsukuba-shi Ibaraki 300-4292 (JP); UMEOKA, Takashi, Tsukuba-shi Ibaraki 300-4292 (JP); SUGAHARA, Yasuhiro, Tsukuba-shi Ibaraki 300-4292 (JP)
(74) Representative: Müller-Boré & Partner Patentanwälte PartG mbB
(86) International application number: PCT/JP2015/083778
(87) International publication number: WO 2016/088761

(57) **Abstract**

An electric power control system for controlling supply and consumption of electric power in a system power supply, a storage battery and an electric power load, said electric power control system including: an estimated value correction unit configured to obtain a difference between a past power control estimated value and a past actual performance value, and to shift a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and a power control unit configured to control supply and consumption of electric power in the system power supply, the storage battery, and the electric power load, based on the power control estimated value corrected by the estimated value correction unit.

## Description

### TECHNICAL FIELD

The present invention relates to an electric power control system, an electric power control method and a program.

Priority is claimed on Japanese Patent Application No. 2014-243957, filed December 2, 2014, the contents of which are incorporated herein by reference.

### DESCRIPTION OF RELATED ART

In recent years, the liberalization of the electricity retail market has been progressed, so that electricity consumers have increased options for purchasing electricity and can purchase electricity at a lower cost.

On the other hand, most retailers must depend on unstable sources such as surplus electricity from factories and other facilities or electricity procured from natural energy. The retailers are attempting to avoid the problem of unstable power supply by improving the accuracy of estimating electric power to be obtained as surplus electric power or electric power to be generated from natural energy, or by means of mutual transactions of electric power among retailers.

Furthermore, electric power to be supplied to customers is controlled by controlling demands and dynamic pricing (price adjustment by time period etc.) with respect to the power consumed by customers.

In consumer facilities, measures for power consumption suppression are taken, examples of which include reducing the power consumption by suppressing the operation of household electrical appliances, or shifting the operation time from a time period with higher power consumption to a time period with lower power consumption (see, for example, Patent Document 1 and Patent Document 2).

Meanwhile, many of the countermeasures taken in the customer facilities depend on individual environments of the customer facilities, which are inferior in both quantity and reliability to control methods such as power control by charge/discharge control of a storage battery, power generation by a fuel cell, and use of a water heater that converts electric power into heat and stores the converted heat. The heat storage and power storage have great advantage, but require a plan for controlling distributed devices and a mechanism for implementing the control (see, for example, Patent Document 3).

When TEMS (Town Energy Management System) or CEMS (Community Energy Management System) encounters a situation where the load power is small relative to the power generated by a solar power generation facility, for example, during daytime under fine weather conditions, a surplus may occur in the power generated by the solar power generation facility. When a surplus power is obtained at a solar power generation facility in a customer facility (such as residential houses, commercial facilities, or industrial facilities), based on the generated power and consumed power by using the technique of Patent Document 2, for example, the surplus power may be charged to the storage battery of the customer facility whereby the surplus power can be effectively used in the community without causing a reverse flow of the surplus power to the system power supply.

Further, a power control system is known which estimates a surplus power based on the estimated power generation and the estimated power consumption, and adjusts the balance between the power stored by a storage battery and the power consumed by load (see, for example, Patent Documents 3 and 4).

### DOCUMENTS OF RELATED ART

### [Patent Document]

Patent Document 1: Japanese Unexamined Patent Application Publication No. 2006-74952
Patent Document 2: Japanese Unexamined Patent Application Publication No. Hei 11-346437
Patent Document 3: Japanese Unexamined Patent Application Publication No. 2014-168315
Patent Document 4: Japanese Unexamined Patent Application Publication No. 2014-30334

### DISCLOSURE OF INVENTION

### Problems to be Solved by the Invention

Further, the value of (expense for) electricity fluctuates depending on the season and the time period of the day. That is, when a surplus in electric power occurs with respect to the power control plan, the value of electric power declines due to oversupply of the electric power. On the other hand, when the electric power generated is insufficient with respect to the power control plan, the value of the electric power rises due to excessive demand for electric power. Therefore, a low accuracy of estimation for power control including estimation of surplus power may result not only in low self-sufficiency of electric power but also in purchase of more expensive extra electric power from the system power supply, which increases the electricity charge.

As described above, in order to reduce the electricity charge, improve the self-sufficiency, and reduce the purchase of extra electric power from the system power supply, while taking into account the effective utilization of natural energy, it is important to improve the accuracy of estimate of the power control including a surplus electric power to thereby uniformly reduce the error of the amount of power used for the power control. That is, in order to realize each of the reduction of the electricity charge, the improvement of the self-sufficiency and the decrease of the purchase of extra electric power from the system power supply, it is necessary to reduce the error between the plan of the estimated electric power control and the actual management result.

The present invention has been made in view of such circumstances, and the object of the present invention is to provide an electric power control system, an electric power control method and an electric power control program, which improve the estimation accuracy of the management plan for power supply to the electric power load as compared to the conventional technique, and optimize the supply of electric power as the electric power consumption, thereby realizing the reduction of the electricity charge, the improvement of the self-sufficiency, and reduction of purchase of extra electric power from the system power supply.

### Means to Solve the Problems

The (electric) power control system according to one embodiment of the present invention is a system for controlling supply and consumption of power in a system power supply, a storage battery and an electric power load. The electric power control system includes: an estimated value correction unit configured to obtain a difference between a past power control estimated value and a past actual performance value, and to shift a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and a power control unit configured to control supply and consumption of electric power in the system power supply, the storage battery, and the electric power load, based on the power control estimated value corrected by the estimated value correction unit.

In the electric power control system according to one embodiment of the present invention, the estimated value correction unit is configured to obtain a difference between the past power control estimated value and the past actual performance value with respect to each of the predetermined periods, and correct the power control estimated value, such that the corrected value satisfies a predetermined evaluation value.

In the electric power control system according to one embodiment of the present invention, each of the past power control estimated value and the past actual performance value is a value of one day before the predetermined period.

In the electric power control system according to one embodiment of the present invention, the past power control estimated value and the past actual performance value are values of the same day of week as in the past as the day including the predetermined period.

In the electric power control system according to one embodiment of the present invention, the power control estimated value is an amount of power discharged from the storage battery in each predetermined period.

In the electric power control system according to one embodiment of the present invention, a power generator is further provided, and the power control estimated value includes an amount of power charged to the storage battery from the power generated by the power generator in each predetermined period.

In the electric power control system according to one embodiment of the present invention, a power generator is further provided, and the power control estimated value is an amount of power generated by the power generator in each predetermined period.

In the electric power control system according to one embodiment of the present invention, the power control estimated value is an amount of power consumed by the electric power load in each predetermined period.

In the electric power control system according to one embodiment of the present invention, the power control estimated value is an amount of power purchased from the system power supply in each predetermined period.

In the electric power control system according to one embodiment of the present invention, the power control estimated value is an amount of power charged and discharged with respect to the storage battery, an amount of power generated by the power generator, an amount of power consumed by the electric power load, or an amount of power purchased from the system power supply, in each predetermined period.

In the power management system according to one embodiment of the present invention, the supply and consumption of power is controlled with respect to a group including a customer facility having the storage battery and the electric power load as electrical equipment and another customer facility not including the storage battery as electrical equipment.

In the power management system according to one embodiment of the present invention, the supply and consumption of power is controlled with respect to a group including a customer facility having the storage battery and the electric power load as electrical equipment and another customer facility not including the storage battery as electrical equipment.

The electric power control method according to one embodiment of the present invention is a method for controlling supply and consumption of electric power in a system power supply, a storage battery and an electric power load. The electric power control method includes: an estimated value correction step of causing an estimated value correction unit to obtain a difference between a past power control estimated value and a past actual performance value, and to shift a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and a power control step of causing a power control estimation unit to control supply and consumption of electric power in the system power supply, the storage battery, and the electric power load, based on the power control estimated value corrected by the estimated value correction unit.

The program according to one embodiment of the present invention is a program for causing a computer to execute operations of an electric power control system for controlling supply and consumption of electric power in a system power supply, a storage battery and an electric power load. The computer grogram causes the computer to execute: an estimated value correction by obtaining a difference between a past power control estimated value and a past actual performance value, and shifting a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and a power control by controlling supply and consumption of electric power in the system power supply, the storage battery, and the electric power load, based on the power control estimated value corrected by the estimated value correction.

### EFFECT OF THE INVENTION

According to the present invention, it is possible to provide a power control system, a power control method and a power control program, which improve the estimation accuracy of the management plan for power supply to the electric power load as compared to the conventional technique, and optimize the supply of power as the power consumption, thereby realizing the reduction of the electricity charge, the improvement of the self-sufficiency, and the reduction of purchase of extra electric power from the system power supply.

### BRIEF DESCRIPTION OF THE DRAWINGS

FIG. 1 is a diagram showing an example of configuration of electrical equipment belonging to a customer facility 10.
FIG. 2 is a diagram showing an example of a power control estimation pattern estimated by a power control estimation unit 108.
FIG. 3 is a diagram showing an example of transition of the power consumed in the customer facility 10 in one day.
FIG .4 is a diagram showing the difference (estimation error) in the discharge power with respect to each predetermined time interval between the past power control estimation pattern and the past actual performance pattern of a past day relative to a predetermined day.
FIG. 5 is a diagram showing the amount of financial loss when the power control is shifted to a larger overall discharge power while the electricity charge is constant.
FIG. 6 is a diagram showing the distribution of the differences in FIG. 5 as a histogram.
FIG. 7 is a diagram showing the amount of financial loss when the power control is shifted to a larger overall discharge power while the electricity charge is not constant.
FIG. 8 is a table illustrating a method for obtaining a power shift amount for shifting the discharge power.
FIG. 9 shows an example of configuration of a power control system according to the second embodiment of the present invention.
FIG. 10 shows an example of configuration of electrical equipment belonging to a customer facility 10A.
FIG. 11 is a diagram showing an example of configuration of a power control apparatus 200 adapted to the power distribution control according to the second embodiment.

### DESCRIPTION OF THE EMBODIMENTS

### <First embodiment>

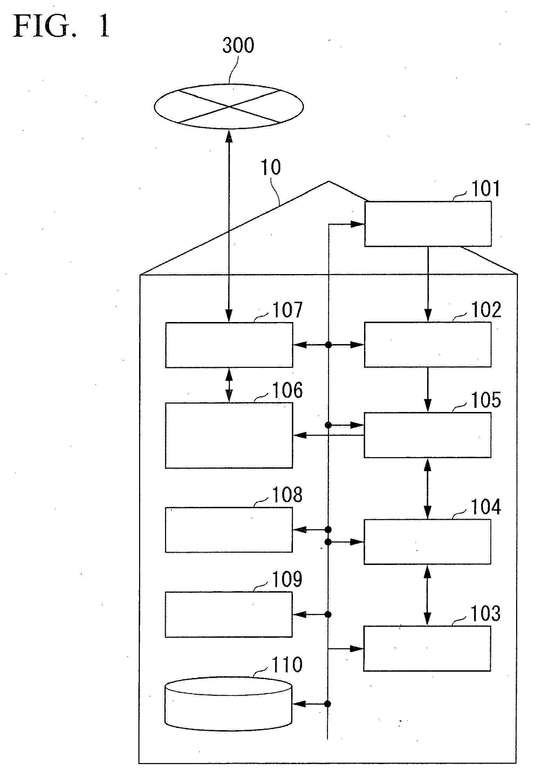

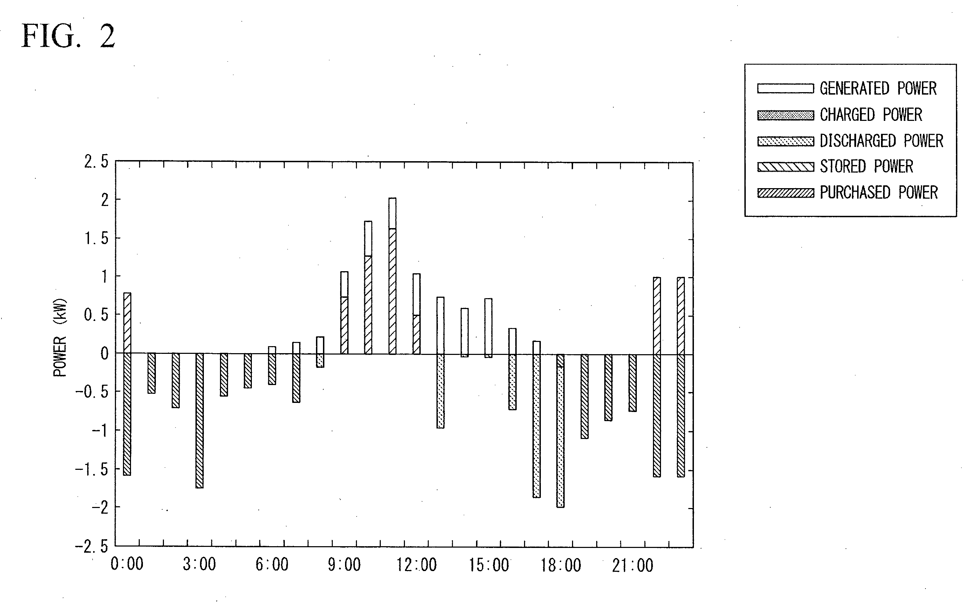

Hereinbelow, explanations are made on an example of electrical equipment provided in one customer fancily 10, referring to FIG. 1. FIG. 2 shows an example of configuration of electrical equipment provided in one customer facility 10. The power control system of this embodiment collectively manages the power in customer facilities such as residential houses, commercial facilities and industrial facilities. Such a power control system corresponds to, for example, what is called HEMS (Home Energy Management System). Here, FIG. 1 shows an example of configuration of electrical equipment provided in the customer facility 10. In this FIG. 1, the customer facility 10 has, as electrical equipment, a photovoltaic module 101, a power conditioning system 102, a storage battery 103, an inverter 104, a power line switch 105, a load 106 (electric power load), a control unit 107 provided per facility, a power control estimation unit 108, an estimated value correction unit 109, and a storage unit 110.

The customer facility 10 is, for example, any of residential houses, commercial facilities, and industrial facilities. In a customer facility 10 having a photovoltaic module 101 and a storage battery 103, the storage battery 103 can be charged with the power generated by the photovoltaic module 101.

The photovoltaic module 101 is one of the power generators utilizing sunlight as the renewable energy, and generates power by converting light energy into electric power by the photovoltaic effect. The photovoltaic module 101 is installed, for example, at a location where the sunlight is unlikely to be shielded at a side of a power generation element, such as a roof of the customer facility 10, whereby the sunlight can be efficiently converted into electric power.

The power conditioning system 102 is provided in correspondence with the photovoltaic module 101, and converts the direct current power output from the photovoltaic module 101 into an alternating current power with voltage and frequency corresponding to the specification of the power input of the load.

The inverter 104 is provided with respect to each of the storage batteries 103, and converts electricity charged to the storage battery 103 from alternating current to direct current or converts electricity discharged from the storage battery 103 from direct current to alternating current. That is, the inverter 104 performs bidirectional conversion of direct current/alternate current input to or output from the storage battery 103.

Specifically, when the storage battery 103 is being charged, an alternating current power for charging is supplied to the inverter 104 from the commercial power supply 2 or the power conditioning system 102 via a power line switch 105. The inverter 104 converts the alternating current power thus supplied to a direct current power, and supplies the power to the storage battery 103. Further, when the storage battery discharges, a direct current power is output from the storage battery 103. The inverter 104 converts the direct current power thus output from the storage battery 103 to an alternating current power, and supplies the power to the power line switch 105.

The power line switch 105 switches the power path in response to the control by the control unit 107 provided per facility. Here, the control unit 107 provided per facility can control the power line switch 105 in response to an instruction given by the control unit 107 provided per facility. Due to the aforementioned control, the power line switch 105 can form a power path such that a power from the commercial power supply 2 is supplied to the load 106 in the same customer facility 10. The power line switch 105 can also form a power path such that a power generated by the photovoltaic module 101 is supplied through the power conditioning system 102 to the load 106 in the customer facility 10.

The power line switch 105 can also form a power path such that a power supplied from one or both of the commercial power supply 2 and the photovoltaic module 101 is charged to the storage battery 103 through the inverter 104 in the same customer facility 10. The power line switch 105 can also form a power path such that a power output from the storage battery 103 by discharging is supplied through the inverter 104 to the load 106 in the same customer facility 10.

The load 106 includes at least one device, equipment etc. which consume electric power for their own operation in the customer facilities 10.

The control unit 107 provided per facility controls electric equipment (all or some of the photovoltaic module 101, the power conditioning system 102, the storage battery 103, the inverter 104, the power line switch 105 and the load 106) in the customer facility 10.

The power control estimation unit 108 estimates the power consumption of the load 106, the power generation of the photovoltaic module 101, and the charge or discharge power of the storage battery 103 in the customer facility 10. At this time, when the predetermined date is the next day, the power control estimation unit 108 reads the history of the power consumption of the customer facility 10 in a predetermined period (for example, one week) including the previous day. Alternatively, the power control estimation unit 108 may be configured to read the history of the power consumption of the customer facility 10 in the same season range as the next day in a predetermined period (for example, one year).

Next, the power control estimation unit 108 reads the weather forecast of the next day from a weather forecast website presenting any weather forecast data via the Internet. Alternatively, the power control estimation unit 108 may receive prediction data of solar radiation amount of the next day or the like delivered from a server of a weather information distribution company.

Then, the power control estimation unit 108 compares the history of the power consumption in the customer facility 10 with the data of the weather forecast of a target day for estimation (or the time period (for example, a time period such as 13 o'clock to 15 o'clock) to be estimated of a predetermined day) to thereby obtain a power pattern of power consumption (time-series collection of values of power demand estimation discretely estimated at predetermined intervals) as an estimated value of power consumption of the next day (i.e., a power pattern of time-series collection of discrete power values which are estimated at predetermined time intervals (e.g., every day, every hour, every minute, etc.), for example, at every minute with the time interval being set as one day), and writes and stores the obtained power pattern as a part of a power control estimation pattern to be described later in the storage unit 110. Here, for example, the time period ranges from 13 o'clock to 15 o'clock. As an example of manners of obtaining the power pattern as the estimated value of the power consumption, the power control estimation unit 108 selects a past day with a weather and a temperature in the same season as the target day for estimation which are similar to the weather and the temperature of the target day for estimation, calculates the average power consumption on the selected past day, and determines the average value obtained from this calculation as the power consumption of the target day for estimation, that is, the next day. Further, when the estimation is made with respect to a certain time period, the power control estimation unit 108 selects a past day with a weather and a temperature in the same season as the day with its time period to be estimated which are similar to the weather and the temperature of the day with its time period to be estimated, calculates the average power consumption in the time period of the selected past day, and determines the average value obtained from this calculation as the power consumption of the time period to be estimated, that is, the time period of the next day. Hereinafter, the present embodiment will be explained with respect to a case where the time period for estimation is one day and the target day for estimation is the next day.

Then, the power control estimation unit 108 estimates a power pattern of power generated by the photovoltaic module 101 on the next day (time-series collection of estimated values of power generation estimated discretely at predetermined intervals) from a power pattern of power generation in the same season and with the same weather as the next day (time-series collection of measured values of past power generation measured discretely at predetermined intervals). Further, in correspondence with the amount of the consumed power, the power control estimation unit 108 estimates a power pattern of power charged to the storage battery 103 from the aforementioned generated power (time-series collection of estimated values of power charged to the storage battery 103 from the generated power, which are estimated discretely at predetermined intervals) and a power pattern of power charged to the storage battery 103 from the system power supply (time-series collection of power charged to the storage battery 103 from the system power supply, which are estimated discretely at predetermined intervals). That is, various discrete power values at a certain time (for example, one minute) including an instantaneous value are obtained as consecutive values in a period (a predetermined time period of each day) which are used as a power pattern.

At this time, for estimating the power pattern (power consumption, power generation) in a predetermined time period, the power control estimation unit 108 may be configured to extract a power pattern of the target time period for estimation in the past history, which is similar to (has a pattern shape which is the closest to that of) a power pattern of a time period prior to the target time period for estimation. As an example, for estimating the power pattern in the time period after the morning (9 o'clock), the power control estimation unit 108 may extract a day with a power pattern in the time period of from 6 am to 9 am, which is similar to the power pattern in the time period of from 6 am to 9 am of the target day for estimation. Then, the power control estimation unit 108 estimates the power pattern after 9 am of the target day for estimation, using the power pattern after 9 o'clock of the extracted day. In particular, this is effective for estimating the power pattern of from 9 am until evening (sunset). Here, the similarity of the patterns may be judged based on any known method, e.g., the least squares method.

In addition, the similarity of peak patterns at noontime when the power consumption or the power generation peaks in a day is also important for estimating the power pattern. When the time period in which the power consumption peaks is from 13 o'clock to 14 o'clock, for performing estimation in this time period with high accuracy, the power control estimation unit 108 may extracts a day with a power pattern in the time period of from 10 o'clock to 12 o'clock from the history, which is similar to the power pattern in the time period of from 10 o'clock to 12 o'clock, i.e., time period immediately before the target time period of the target day for estimation. Then, the power control estimation unit 108 estimates the power pattern in the time period of from 13 o'clock to 14 o'clock of the target day for estimation, using the power pattern in the time period of from 13 o'clock to 14 o'clock of the extracted day.

Based on the power consumption and power generation estimated as described above, the power control estimation unit 108 estimates the charge and discharge amounts with respect to the storage battery 103 at each predetermined interval on the next day such that the self-sufficiency is maximized. Then, the power control estimation unit 108 generates a power control estimation pattern composed of power patterns shown with predetermined time intervals. The power patterns include at least the power consumption, the power purchase, the power generation, the charge power amount, the discharge power amount and the like at the customer facility 10 on the next day, which are shown as discrete values at predetermined intervals.

FIG. 2 is a diagram showing an example of a power control estimation pattern estimated by a power control estimation unit 108. In FIG. 2, the horizontal axis shows the elapsed time (minutes), and the vertical axis shows the power amount at each time interval. FIG. 2 shows only a pattern as a time-series collection of numerical values of power amounts at a specific restricted time interval (for example, time-series collection of estimated values at an interval of 1 minute), while omitting patterns at other time intervals. Specifically, FIG. 2 shows patterns of various power amounts, i.e., the power consumption, the power purchase, the power generation, the charge power, and the discharge power, which are estimated at a time interval of 1 minute. Further, the times for the pattern need not be continuous nor with the same time intervals. For example, the discrete estimated values of power at 7 o'clock, 12 o'clock and 13 o'clock in FIG. 2 may be extracted in time-series and grouped into a pattern of the power.

Thus, for example, the power control estimation pattern at predetermined time intervals may be, as shown in FIG. 2, composed of estimated power patterns including discrete estimated values of the power consumption, the power purchase, the power generation, the charge power, the discharge power and the like.

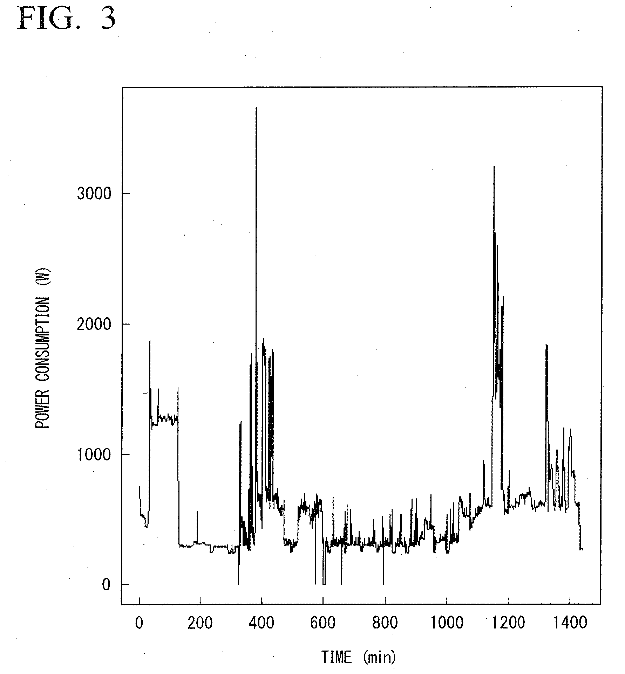

FIG. 3 is a diagram showing an example of transition of the power consumed in the customer facility 10 in one day. In FIG. 3, the horizontal axis shows the elapsed time (minutes), and the vertical axis shows the power at each time.

Since the power consumed by the load 106 in the customer facility 10 varies from moment to moment, the power discharged as necessary from the storage battery 103 or the power charged as necessary from the system power supply also changes constantly. Therefore, in the power control estimation unit 108, it is necessary to appropriately perform discharging from the storage battery 103 and charging of the storage battery with the power from the system power supply or with the power generated by the photovoltaic module 101 in accordance with the power consumed by the load 106. Therefore, the power control estimation pattern used for managing the supply of the power consumed for the load 106 of the customer facility 10 needs to approximate closer to the actual performance pattern.

Returning to FIG. 1, the estimated value correction unit 109 compares a past power control estimation pattern in a predetermined period in the past with a past actual performance pattern showing actual values of power consumption, power purchase, power generation, power charge, power discharge and the like of the same day as the day including the predetermined period in the past, and correct the power control estimation pattern generated by the power control estimation unit 108. Here, the past power control estimation pattern and the past actual performance pattern which are used for the comparison with respect to the predetermined period include data of a past day near the target day for estimation, such as the previous day or the same day of the week in the past, or a past day which is the same as the target day for estimation in respect of season, weather, day of the week etc. Further, the predetermined period which is subjected to correction and the predetermined period in the past do not need to have the same length. That is, the power control estimation pattern for the entire time of the correction target day may be corrected based on the difference between the past values for one hour, i.e., difference between the estimated value in the past power control estimation pattern and the actual performance value in the past actual performance pattern in the past day, each obtained for one hour in the past day.

At this time, the estimated value correction unit 109 obtains the difference between the estimated value in the past power control estimation pattern and the actual performance value in the past actual performance pattern with respect to each predetermined time interval of the predetermined day, and correct the power control estimation pattern by reflecting (for example, by addition or reduction) a correction value corresponding to the obtained difference to the power amount of each of the corresponding estimated values of the power control estimation pattern at the corresponding time so as to maximize the self-sufficiency. Since the power pattern in the power control estimation pattern is changed so as to increase the self-sufficiency, the correction value corresponding to the difference is generated such that the power value in the power pattern of the sold power decreases when adding the correction value to or subtracting the correction value from the power value in the predetermined power pattern.

Here, whether the self-sufficiency is maximized or not is judged on the basis of a criterion that the amount of purchased power supplied from the system power supply is minimized or the electricity charge for receiving the supply of the purchased power becomes the lowest. That is, the self-sufficiency is judged to be maximized when a ratio of the power generated by the photovoltaic module 101 in the power consumed by the customer facility 10 or the charge for the power purchased from the system power supply is minimized. Here, since the electricity charge varies depending on time of a day, even if the total amount of the purchased power is reduced without considering the time, the electricity charge of the day is not always minimized.

Next, as an example, explanation is made on the case where the estimated value correction unit 109 performs a process of reducing power purchase from the system power supply by correcting the discharge power of the storage battery 103 in correspondence with the difference in the power value in the power pattern of the power consumption between the past power control estimation pattern and the past actual performance pattern. For simplicity, charging of the storage battery 103 from the power generated by the photovoltaic module 101 will be omitted in the following explanation. The estimated value correction unit 109 obtains the difference in the power value for power consumption with respect to each predetermined time interval between the past power control estimation pattern and the past actual performance pattern of the predetermined day. Then, by the process described below, the estimated value correction unit 109 obtains a correction value for correcting the power pattern of the power discharged from the storage battery 103 at each predetermined time interval, and corrects the power value for the power pattern of the discharge power in the power control estimation pattern to generate a corrected power control estimation pattern.

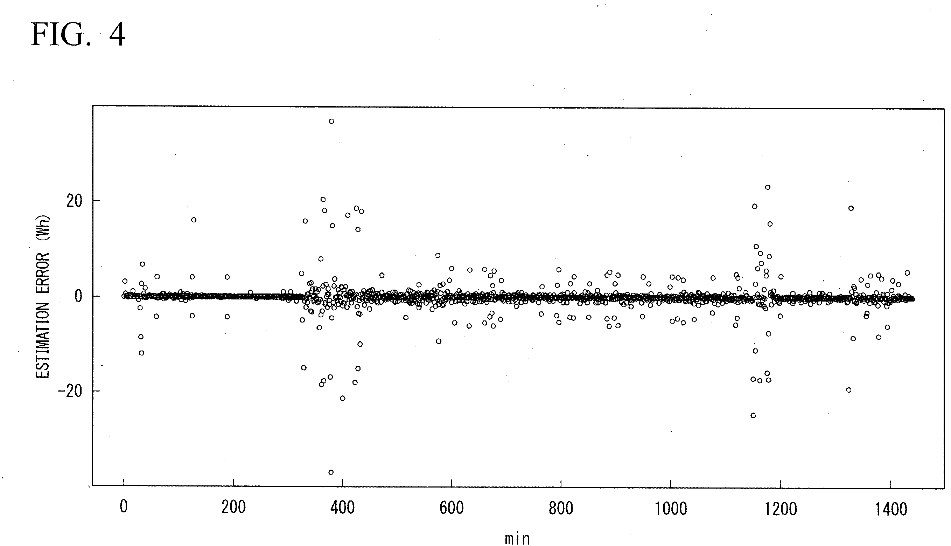

FIG. 4 is a diagram showing the difference in the power value for discharge power with respect to each predetermined time interval between the past power control estimation pattern and the past actual performance pattern of a past day relative to the predetermined day. In FIG. 4, the horizontal axis shows the elapsed time (minutes), and the vertical axis shows the discharge power at each time. That is, when the difference is a positive value, this means that a larger amount of discharged power has flown to the system power supply in the actual performance than in the estimation. On the other hand, when the difference is a negative value, this means that the discharged power in the actual performance is smaller than in the estimation, and a shortage of power is supplied from the system power supply as the purchased power.

For example, when the power consumption at a predetermined interval is 1 kW and the estimated value is 400 W, there is a power shortage of -600 W, and this -600 W is supplied from the system power supply. In the present embodiment, since the predetermined time interval is 1 minute, the power shortage at the predetermined time interval is calculated by -600 W × (1/60) h (hour); hence, the power balance at this predetermined time interval is a negative difference of -10 Wh (watt-hour). This FIG. 4 shows a distribution of the differences in the power values constituting the power pattern of the discharge power between the past power control estimation pattern and the past actual performance pattern when the day is expressed as 1440 minutes (24 hours × 60 minutes).

As described above, the shortage of the discharge power in the past power control estimation pattern is compensated by purchasing power from the system power supply. For this reason, a difference as excessive negative power value occurs in the power pattern of the discharge power between the past power control estimation pattern and the past actual performance pattern. This results in a greater loss due to the increase in purchased power which reduces the self-sufficiency, and the self-sufficiency at the customer facility 10 decreases. As a measure for increasing the self-sufficiency, it is conceivable to shift the power control to a larger power discharged from the storage battery 103 through an entire day, whereby the purchased power in the power control estimation pattern (power for charging the storage battery 103) can be reduced and the self-sufficiency can be increased.

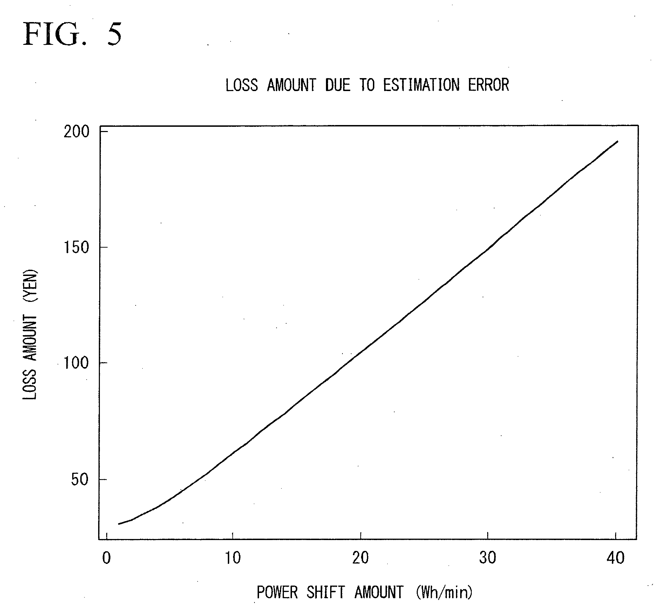

FIG. 5 is a diagram showing the amount of financial loss when the power control is shifted to a larger overall discharge power while the electricity charge is constant. In FIG. 5, the horizontal axis indicates the power shift amount caused by shifting the discharge power, and the vertical axis indicates the financial loss. In the case where the electricity charge is constant through the entire day, the financial loss due to the electricity charge at each predetermined time interval in the power control estimation pattern and the past actual performance pattern of the predetermined day is increased, as compared to the case where the power pattern of the discharge power is not shifted to a larger discharge power. From this result, when the electricity charge is constantly 20 yen/kWh (0.02 yen/Wh) throughout a day, the shift of the center of the distribution of the differences in FIG. 4 from 0 toward an increasing direction simply results in an increased financial loss due to electricity charge.

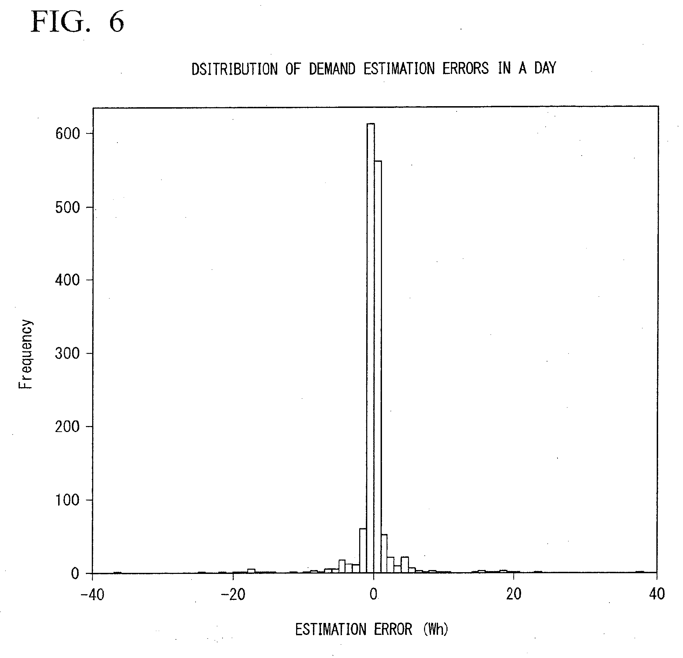

FIG. 6 is a diagram showing the distribution of the differences in FIG. 5 as a histogram. As shown in FIG. 6, the distribution observed with respect to differences at every one minute, i.e., predetermined time interval, though the entire day is a normal distribution due to the estimation error of the past power control estimation pattern. That is, the probabilities of the positive difference and the negative difference in the power pattern are the same. Therefore, as explained for FIG. 5, when the electricity charge is constantly 20 yen/kWh (0.02 yen/Wh) throughout a day, the electricity charge simply increases to cause a financial loss.

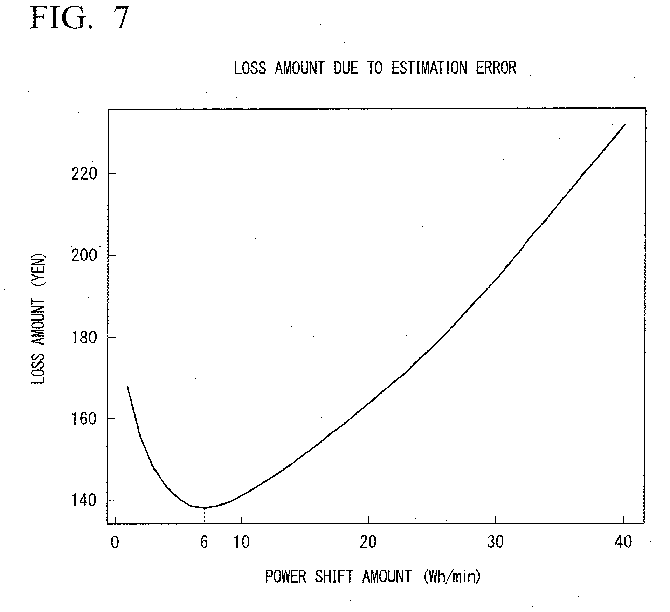

FIG. 7 is a diagram showing the amount of financial loss when the power control is shifted to a larger overall discharge power while the electricity charge is not constant. In FIG. 7, the horizontal axis indicates the shift power amount (correction value) caused by shifting the discharge power, and the vertical axis indicates the financial loss. That is, even if the probabilities of the positive difference and the negative difference in the power pattern are the same, in the case where the electricity charge is not constant and varies depending on time unlike the case of FIG. 5, the financial loss due to the electricity charge can be reduced by appropriately shifting the discharge power.

For example, when the electricity charge for a certain time period is 200 yen/kWh (0.2 yen/Wh) and the electricity charge for other time period is 20 yen/kWh (0.02 yen/Wh), the financial loss caused by purchasing power from the system power supply is 200 yen, whereas the financial loss due to the electricity charge can be suppressed to 20 yen if the power is discharged from the storage battery 103. In this case, as shown in FIG. 7, when the discharge power is gradually shifted to a larger overall discharge power, the financial loss for the entire day decreases until a predetermined discharge power is reached.

Then, the shift toward a larger discharge power proceeds, and the financial loss reaches the minimum value at a certain discharge power. When the discharge power is further shifted toward a larger discharge power from the point where the financial loss is minimized, the financial loss gradually increases as the discharge power increases. That is, the reduction in the purchase power corresponding to charging of the storage battery 103 from the system power supply results in a lower financial loss for the entire day; however, when the discharge power is increased too much relative to the optimum value, the financial loss increases despite the low price of the power.

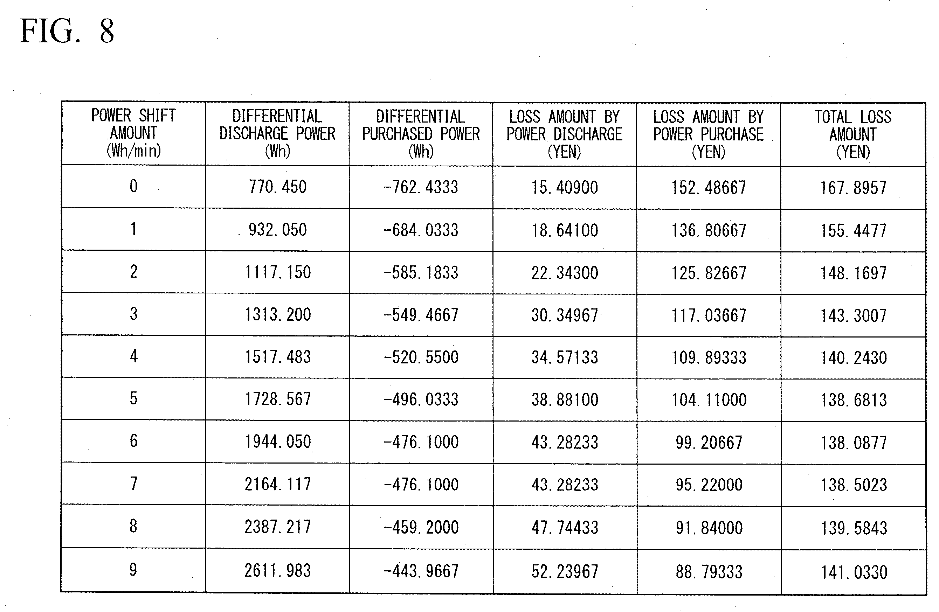

FIG. 8 is a table illustrating a method for obtaining a shift power amount for shifting the discharge power. In the table of FIG. 8, the differential discharge power of a day, the differential purchased power of the day, the loss amount by power discharge indicating the financial loss caused by power discharge of the day, the loss amount by power purchase indicating the financial loss caused by power purchase of the day and the total loss amount as a sum of the loss amount by power discharge and the loss amount by power purchase are described in correspondence with the shift power amount. The differential discharge power indicates a sum of the differences between the discharge power pattern in the past power control estimation pattern and the shift amount as a correction value for one day. The differential purchased power amount indicates a sum of the differences of the charge power used for charging the storage battery 103 corresponding to the shift amount of the discharge power pattern in the past power control estimation pattern for one day. The loss amount by power discharge indicates an amount obtained by multiplying the sum of the differences of the discharge power by the electricity charge at the time of charging (for example, 20 yen/kWh). The loss amount by power purchase indicates an amount obtained by multiplying the sum of the differences of the charge power by the electricity charge at the time of charging (for example, at 200 yen/kWh). The total loss amount indicates a total amount obtained by adding the loss amount by power purchase to the loss amount by power discharge.

As shown in FIG. 8, when positive values of power indicating an excessive supply of the discharge power among the 1440 differential powers in FIG. 4 are integrated without adding the correction value, the differential discharge power is 770. 45.

On the other hand, when negative values of power at predetermined time periods during which the purchased power is supplied in surplus for charging the storage battery 103 among the 1440 differential powers in the entire day are integrated without adding the correction value, the differential discharge power is -762.433. Further, in the lines of the table are respectively described changes of the differential discharge power, the difference purchased power, the loss amount by power discharge, the loss amount by power purchase, and the total loss amount, which are values when the shift power amount is increased by 1 (Wh/min). In this table, the differential discharge power, the difference purchased power, the loss amount by power discharge, the loss amount by power purchase, and the total loss amount, which are values when the shift power amount is increased by 1 (Wh/min), are calculated. This simulation for calculating the differential discharge power, the difference purchased power, the loss amount by power discharge, the loss amount by power purchase, and the total loss amount is performed by the estimated value correction unit 109.

Returning to FIG. 1, as described above, the estimated value correction unit 109 performs a simulation for calculating the differential discharge power, the differential purchased power, the loss amount by power discharge, the loss amount by power purchase, and the total loss amount, which are values when the shift power amount is increased by 1 (Wh/min). Then, the estimated value correction unit 109 obtains the shift power amount at which the total loss amount shown in FIG. 7 is minimized.

Further, the estimated value correction unit 109 adds the obtained shift power amount as a correction value to the pattern of the discharge power in the power control estimation pattern. The estimated value correction unit 109 stores the corrected power control estimation pattern of the next day in the storage unit 110 together with the power control estimation pattern before the correction.

The estimated value correction unit 109 reads and uses each of the past power control estimation pattern and the past actual performance pattern of the predetermined day which are stored in the storage unit 110.

Alternatively, the estimated value correction unit 109 may be configured to read from the storage unit 110 a past power control estimation pattern of a predetermined day which is the closest to the power control estimation pattern to be corrected, instead of the past power control estimation pattern and the past actual performance pattern of a day before the target day for estimation. Then, the estimated value correction unit 109 reads the past actual performance pattern corresponding to the past power control estimation pattern, together with the past power control estimation pattern. The estimated value correction unit 109 obtains a difference of the power from the past power control estimation pattern and the past actual performance pattern which have been read.

In the storage unit 110, the past power control estimation pattern and the past actual performance pattern in the customer facility 10A for every day over past several years are written and stored. In the storage unit 110, the electricity charge for each time period in one day is also stored. Here, the control unit 107 provided per facility receives and reads, via a network such as the Internet, a changed electricity charge notified from a power company that manages the system power supply when the electricity charge is changed, and writes the read electricity charge into the storage unit 110 to update the electricity charge.

The control unit 107 provided per facility reads out the corrected power control estimation pattern written in the storage unit 110, controls the charge and discharge of the storage battery 103, the switching of the power line switch 105, the operation of the inverter 104 and the operation of the power conditioning system 102 based on this corrected power control estimation pattern, and supplies the power for consumption to the load 106 via the power line switch 105.

When a target day for the corrected power control estimation pattern ends, the control unit 107 provided per facility associates the actual performance pattern corresponding to the power actually consumed by the load 106 as a past actual performance pattern with the corrected power control estimation pattern, and writes the resultant into the storage unit 110 together with the specific date of the day to have them stored therein. Here, the control unit 107 provided per facility measures the power consumed by the load 106, the purchased power supplied from the system power supply, the power generated by the photovoltaic module 101, and the power charged to the storage battery 103 at predetermined time intervals by a power sensor provided in the power line switch 105 to generate the actual performance pattern composed of the patterns of the aforementioned powers.

As described above, in the present embodiment, by increasing the discharge power in the time intervals of all the time periods of a day during which discharge is performed or all the time periods of a day during which the electricity charge is high, it is possible to cope even with a case where the time of increase in the power consumed for charging the storage battery 103 is slightly shifted and it is possible to reduce the supply of the purchased power used for charging the storage battery 103 in an amount corresponding to the shift of the amount of discharge power relative to the increased power consumption, whereby the financial loss due to the electricity charge can be reduced and the self-sufficiency can be improved.

In the above explanation, the discharge power in the time intervals of all the time periods of a day during which discharge is performed or all the time periods of a day during which the electricity charge is high is increased; however, the system may also be configured to increase the discharged power only in the time period where the electricity charge is high and the density of the negative difference is high (i.e., a situation in which the estimated power consumption is smaller than the actual performance value, and the purchased power is supplied from the system power supply).

Further, in the present embodiment, the photovoltaic module 101 is provided. However, even in a configuration where the photovoltaic module 101 and the power conditioning system 102 are not provided, it is possible to likewise utilize the function of the estimated value correction unit 109 to correct the power control estimation pattern. In this configuration, each of the power control estimation pattern, the corrected power control estimation pattern, the past power control estimation pattern, and the past actual performance pattern does not include the power pattern of the generated power.

Further, in the embodiment as explained above, the estimated value correction unit 109 may be configured to correct the power control estimation pattern so as to reduce the power consumption, because a relatively large power consumption is estimated in accordance with a difference in the power consumption at each predetermined time interval between the past power control estimation pattern and the past actual performance pattern of a predetermined day, that is, when the difference is positive. That is, in a time period at which the electricity charge is high, the power consumption is corrected by reducing the shift power amount corresponding to the difference, and the amount of purchased power is reduced by the same shift power amount. As a result, it becomes possible to reduce the power purchase and improve the self-sufficiency.

Further, the estimated value correction unit 109 may be configured so as to perform a simulation to recalculate the power amounts including the power purchase, the power generation, the power charge, and the power discharge while reducing the power consumption by the predetermined unit amount of power. In this configuration, the shift power amount is obtained such that the financial loss or the power purchase is minimized, and the power control estimation pattern in the time period where the electricity charge is high is corrected to obtain the corrected power control estimation pattern.

Further, the estimated value correction unit 109 may be configured to increase the consumption of the power generated by the photovoltaic module 101, i.e., to reduce the reverse flow of the purchased power and the power to be charged to the storage battery 103, depending on the difference in the power consumption at predetermined time intervals between the past power control estimation pattern and the past actual performance pattern for a predetermined day. In this configuration, when the difference in the power generation between the actual performance and the estimation is positive, the power generation in the actual performance is larger than the power generation in the estimation; therefore, the self-sufficiency can be improved by allowing the generated power to be efficiently consumed in the customer facility 10 instead of flowing the generated power back to the system power supply. At this time, the estimated value correction unit 109 reduces the power purchase in the time period at which the difference in the power consumption is positive so as to minimize the financial loss due to the electricity charge or to minimize the power purchase.

Further, the estimated value correction unit 109 may be configured to increase the consumption of the power generated by the photovoltaic module 101 and to reduce the power to be discharged from the storage battery 103, depending on the difference in the power consumption at predetermined time intervals between the past power control estimation pattern and the past actual performance pattern for a predetermined day. In this configuration, when the difference in the power generation between the actual performance and the estimation is positive, the power generation in the actual performance is larger than the power generation in the estimation; therefore, the self-sufficiency can be improved by allowing the generated power to be efficiently consumed in the customer facility 10 instead of flowing the generated power back to the system power supply.

Therefore, the estimated value correction unit 109 reduces the reverse flow of the power in a time period where the difference in the power consumption is positive by a predetermined shift power amount so as to increase power discharge in a time period where the difference in the power consumption is negative by the predetermined shift power amount, such that the financial loss due to the electricity charge or the power purchase is minimized.

Further, the estimation value correction unit 109 may be configured to reduce the power purchase from the system power supply, depending on a difference in the power consumption at each predetermined time interval between the past power control estimation pattern and the past actual performance pattern of a past day preceding a predetermined day. In this configuration, such a shift power amount that minimizes the financial loss due to the electricity charge or the power purchase is obtained, based on which the power purchase at a time period where the difference in the power consumption is positive is reduced.

Further, the embodiment explained above may be configured such that the power control estimation unit 108 receives a supply of a power corresponding to a difference in the power consumption at each predetermined time interval between the past power control estimation pattern and the past actual performance pattern of a predetermined day. The power control estimation unit 108 may be configured to change various parameters used for obtaining the power control estimation pattern such that the difference fed back is "0".

As described above, in the present embodiment, for generating a power control estimation pattern of a predetermined day, a shift power amount is obtained based on which the power control estimation pattern is corrected, such that the financial loss due to the electricity charge or the power purchase is minimized, depending on a difference in the power consumption at each predetermined time interval between the past power control estimation pattern and the past actual performance pattern of a past day preceding the predetermined day.

Thus, according to the present embodiment, it is possible to effectively improve the self-sufficiency of the power to be consumed while minimizing the financial loss due to the electricity charge or minimizing the power purchase.

### <Second embodiment>

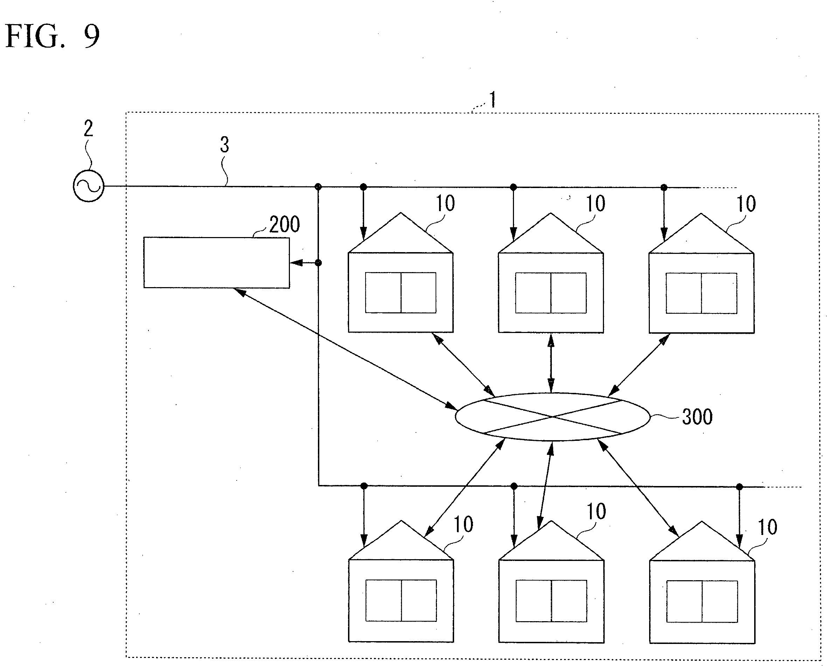

Hereinbelow, explanations are made with respect to the second embodiment of the present invention referring to the drawings. FIG. 9 shows an example of configuration of a power control system according to the second embodiment of the present invention. The power control system of this embodiment collectively manages the power in a plurality of customer facilities such as residential houses, commercial facilities and industrial facilities, which are located in a specific area. Such a power control system corresponds to, for example, what is referred to as TEMS (Town Energy Management System) or CEMS (Community Energy Management System).

The power control system of this embodiment performs power control with respect to electrical equipment provided in each of the plurality of customer facilities 10A in a specific area denoted as power controlled area 1 in FIG. 9.

The customer facilities 10A are, for example, any of residential houses, commercial facilities, and industrial facilities. In addition, the power controlled area 1 in one embodiment may, for example, correspond to one or more housing complexes where each of the customer facilities 10A is a residential house in the housing complexes.

The customer facilities 10A need not be limited to those located in the same area as long as the customer facilities 10A are similarly managed by the power control system. That is, the power control system may cover an assembly of a plurality of customer facilities 10A registered in different areas (e.g., various areas such as Hokkaido, Honshu, Kyushu and Shikoku) as long as such customer facilities are registered as customer facilities 10A under the control of the power control system, and are capable of transmission and receipt of information to be managed via a network 300 to be described later. In this case, the common system power supply 3 is an assembly of the power supply lines in the areas which are connected to the customer facilities 10A respectively. The network 300 is a network mainly through the Internet. The cloud computing, which will be described later, is a mode of utilization of computer resources based on the network 300 mainly through the Internet.

The customer facilities 10A in the power controlled area 1 shown in FIG. 9 include a customer facility 10A equipped with a photovoltaic module 101 which is a power generator for generating electric power by using renewable energy. Further, the customer facilities 10A in the power controlled area 1 include customer facility 10A equipped with a storage battery 103 as electrical equipment. Such customer facilities 10A may include customer facility 10A having both of the photovoltaic module and the storage battery, or customer facility 10A having one of the photovoltaic module and the storage battery.

To the customer facilities 10A in the power controlled area 1 when connected to the common system power supply 3, the powers branched off from the commercial power source 2 are supplied. Each of the customer facilities 10A can supply the power supplied from the system power supply 3 to the load. As a result, various electrical equipment (device) as a load 106 can be operated.

Moreover, a customer facility 10A having a photovoltaic module (photovoltaic module 101 to be described later) can output the power generated by the photovoltaic module to the system power supply 3. Further, a customer facility 10 having a storage battery (photovoltaic module 101 to be described later) can charge the power supplied from the system power supply 3 to the storage battery. Moreover, a customer facility 10 having a photovoltaic module and a storage battery can charge the storage battery with the power generated by the photovoltaic module.

Further, the power control system of the present embodiment is equipped with a power control apparatus 200. The power control apparatus 200 performs power control with respect to electrical equipment provided in each of the plurality of customer facilities 10A belonging to the power controlled area 1. Thus, the power control apparatus 200 in FIG. 9 is connected to the customer facilities 10A in mutually communicable manner via the network 300.

Due to this feature, the power control apparatus 200 can control the electrical equipment provided in each of the plurality of customer facilities 10A.

In the embodiment shown in FIG. 9, the power control apparatus 200 is connected to the system power supply 3; however, the power control apparatus 200 may not be connected to the system power supply 3, for example, in the case where the customer facilities 10A are located in different areas. In this case, since the power control apparatus 200 and each customer facility 10A are connected via the network 300, the power control apparatus 200 is configured such that the information of the system power supply 3 to which each customer facility 10A is connected is obtained from each customer facility 10 via the network 300.

Further, the power control apparatus 200 may be configured to be realized by a cloud service provided by cloud computing of a regional management company, or may be configured as a cloud service provided by a cloud service provider via cloud computing.

That is, the power control apparatus 200 may be managed in the network 300 as a server in cloud computing. Further, the power control apparatus 200 may be configured to be controlled from a server of a cloud service provider.

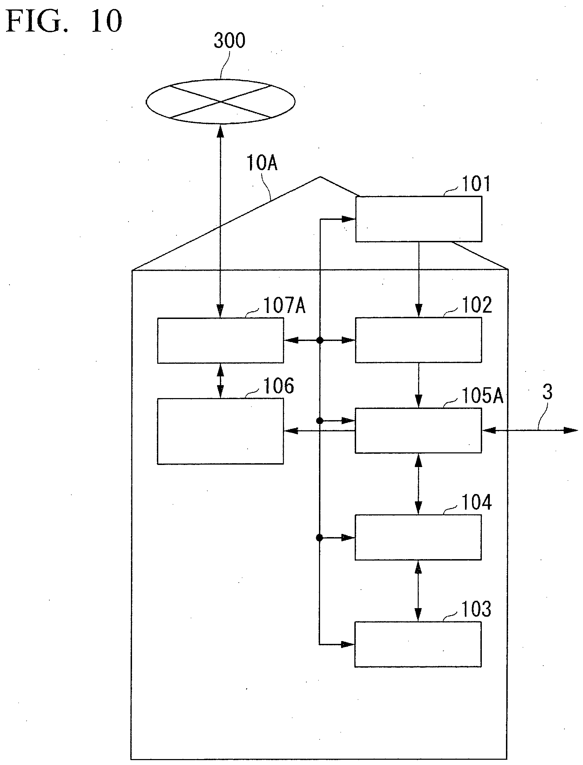

Next, explanations are made on an example of electrical equipment provided in one customer fancily 10A, referring to FIG. 10. FIG. 10 shows an example of configuration of electrical equipment belonging to a customer facility 10A.
With respect to the second embodiment of FIG. 10, the same elements as in the first embodiment of FIG. 1 are denoted with the same reference numerals, and explanations thereof are omitted. The customer facility 10A in the second embodiment lacks each of the power control estimation unit 108, the estimated value correction unit 109, and the storage unit 110 which are shown in FIG. 1. In this FIG. 10, the customer facility 10A has, as electrical equipment, a photovoltaic module 101, a power conditioning system 102, a storage battery 103, an inverter 104, a power line switch 105A, a load 106, and a control unit 107A provided per facility.

The power line switch 105A switches the power path in response to the control by the control unit 107 provided per facility. Here, the control unit 107 provided per facility can control the power line switch 105 in response to an instruction given by the power control apparatus 200. Due to the aforementioned control, the power line switch 105A can form a power path such that a power from the commercial power supply 2 is supplied to the load 106 in the same customer facility 10A.

The power line switch 105A can also form a power path such that a power generated by the photovoltaic module 101 is supplied through the power conditioning system 102 to the load 106 in the customer facility 10A. The power line switch 105A can also form a power path such that a power supplied from one or both of the commercial power supply 2 and the photovoltaic module 101 is charged to the storage battery 103 through the inverter 104 in the same customer facility 10A.

The power line switch 105A can also form a power path such that a power output from the storage battery 103 by discharging is supplied through the inverter 104 to the load 106 in the same customer facility 10A. Further, the power line switch 105A can also form a power path such that a power generated by the photovoltaic module 101 is supplied through the power system of the commercial power supply 2 or the like to the storage battery of another customer facility 10A. Furthermore, the power line switch 105A can also form a power path such that a power output from the storage battery 103 by discharging is supplied to the load 106 in another customer facility 10.

The control unit 107A provided per facility controls electric equipment (all or some of the photovoltaic module 101, the power conditioning system 102, the storage battery 103, the inverter 104, the power line switch 105A and the load 106) in the customer facility 10A.

The power control apparatus 200 shown in the aforementioned FIG.9, which is already explained above, performs power control with respect to the electrical equipment provided in the entire customer facilities 10A belonging to the power controlled area 1. For this purpose, the power control apparatus 200 is connected to each of the control units 107A provided in the respective customer facilities 10A in mutually communicable manner via the network 300. Due to this feature, the control unit 107A provided per facility can control the electrical equipment provided in each of the plurality of customer facilities 10A under its own control in response to the control by the power control apparatus 200.

Alternatively, the control unit 107A provided per facility may be omitted and the power control apparatus 200 may directly control the electrical equipment provided in each of the plurality of customer facilities 10. However, with the configuration including the power control apparatus 200 and the control unit 107A provided per facility as in the present embodiment, the control of the power control apparatus 200 can be prevented from becoming complex by stratifying the targets of control into different levels, i.e., the power controlled area 1 on the whole and the consumer facilities 10A.

Further, as described above, some of the customer facilities 10A in the power controlled area 1 may not be equipped with the photovoltaic module 101, the storage battery 103, the inverter 104, etc.

Here, for example, in the daytime, a power is generated by the photovoltaic module 101. However, for example, in the case where only a small number of people are present in the customer facility 10A, the power consumption by the load 106 becomes considerably small. In such a case, the total amount of power generated by the photovoltaic modules 101 present in the entire power controlled area 1 may exceed the total amount of power required by the loads 106 present in the entirety of the same power controlled area 1. In such a case, even if the power generated by the photovoltaic modules 101 present in the entire power controlled area 1 is supplied to the loads 106 present in the entire power controlled area 1, a surplus occurs in the power generated by the photovoltaic modules 101 present in the entire power controlled area 1. For effectively utilizing the surplus power thus occurred, for example, it is preferable that the surplus power is charged to and stored in the storage batteries 103 installed in the power controlled area 1.

However, the surplus power of the photovoltaic module 101 generated as described above varies depending on, for example, the daily sunshine conditions. For example, when the surplus power is small, the power to be stored in the storage battery 103 also becomes small.

For performing the charging or discharging of the storage batteries 103 of the customer facilities 10 in the power controlled area 1 while taking the aforementioned problem into account, as described below, the power management apparatus 200 of the present embodiment combines the surplus power from the whole customer facilities 10A in the power controlled area 1 and controls the charging and discharging operations of the storage batteries 103 of specific customer facilities 10A. Specifically, the control of the charging and discharging operations of the storage batteries 103 described later involves distribution of the charging power from the photovoltaic module 101 to the storage battery 103 in the power controlled area 1, or distribution of the power from the storage battery 103 to the load 106. For this reason, the control of the charging and discharging operations with respect to the storage batteries 103 described below is also referred to as "power distribution control".

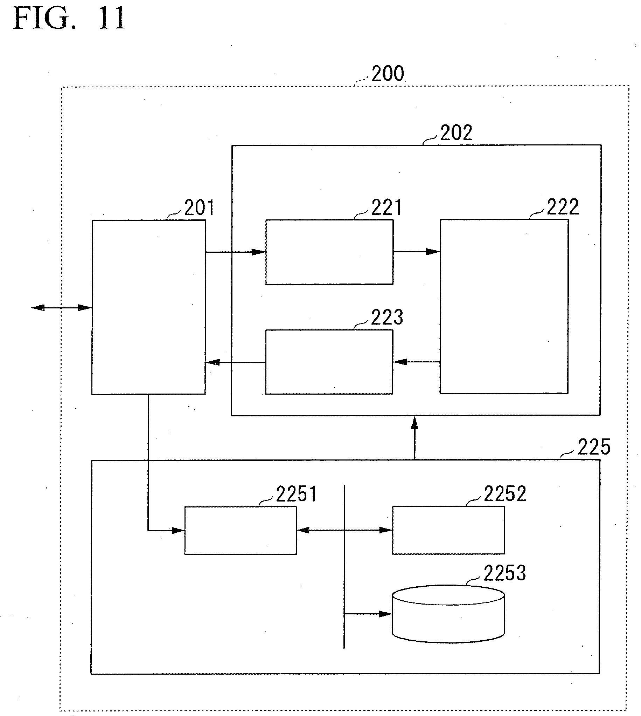

Next, explanations are made on an example of configuration of a power control apparatus 200 adapted to the power distribution control, referring to FIG. 11. FIG. 11 is a diagram showing an example of configuration of a power control apparatus 200 adapted to the power distribution control according to the second embodiment. The power control apparatus 200 has a network I/F unit 201, a first power control unit 202 and a power estimation unit 225 which are adapted to the power distribution control.

The network I/F unit 201 allows exchange of various data between control units 107 of respective customer facilities 10 via the network 300.

The first power control unit 202 (an example of the power management unit adapted to the customer facilities) executes a prescribed power control for the electric equipment in a plurality of the customer facilities 10A in the power controlled area 1. The first power control unit 202 shown in FIG. 11 includes a total power calculation unit 221, a power distribution determination unit 222, and a distribution control unit 223.

The total power calculation unit 221 calculates the total power (total charge power) to be charged to a group of the storage batteries 103 in the power controlled area 1 or the total power (total discharge power) to be discharged from a group of the storage batteries 103 in the power controlled area 1. Hereinbelow, when the total charge power and the total discharge power need not be distinguished from each other, these are collectively referred to as the "total power".

The power distribution determination unit 222 selects at least one storage battery 103 as the distribution target of the total power from among the storage batteries 103 of the plurality of customer facilities 10A based on the respective inverter efficiency characteristics of the inverters 104. In addition to this, the power distribution determination unit 222 also determines power to be distributed to each of the storage batteries 103 of the customer facilities 10A as the determined distribution target.

The distribution control unit 223 performs control such that the determined distribution power is distributed to each of the storage batteries 103 of the customer facilities 10A as the distribution target.

The power estimation unit 225 has a power control estimation unit 2251, an estimated value correction unit 2252, and a storage unit 2253.

The power control estimation unit 2251 estimates the power consumption of the load 106 and the power generation by the photovoltaic module 101 in each of the customer facilities 10A in the power controlled area 1 managed by the power control estimation unit 2251. Here, the power control estimation unit 2251 reads the history of the power consumption of the customer facility 10A in the same season range as the next day in a predetermined period (for example, one year). Further, the power control estimation unit 2251 reads the weather forecast of the next day from a weather forecast website presenting any weather forecast data via the Internet. Alternatively, the power control estimation unit 2251 may receive prediction data of solar radiation amount of the next day or the like delivered from a server of a weather information distribution company.

Then, with respect to each customer facility 10A, the power control estimation unit 2251 obtains the power consumption (estimated power demand) as the estimated value of the power consumption of the next day from the history of the power consumption in the customer facility 10A and the data of the weather forecast for the next day at a predetermined time interval (for example, every one minute), and writes and stores the power consumption data obtained for each consumer facility 10 A in the storage unit 2253.

As an example of manners of obtaining the estimated value of the power consumption, the power control estimation unit 108 selects a past day with a weather and a temperature in the same season as the target day for estimation which are similar to the weather and the temperature of the target day for estimation, calculates the average power consumption on the selected past day, and determines the average value obtained from this calculation as the power consumption of the next day.

Based on the power consumption and power generation estimated with respect to each of the customer facilities 10A as described above, the power control estimation unit 2251 estimates the charge and discharge amounts with respect to the storage battery 103 at each predetermined interval on the respective predetermined days (e.g., the next day) of the customer facilities 10A such that the self-sufficiency is maximized. Then, the power control estimation unit 108 generates individual power control estimation patterns each composed of power patterns shown with predetermined time intervals. The power patterns include at least the power consumption, the power purchase, the power generation, the charge power amount, the discharge power amount and the like at each of the customer facilities 10A in the power controlled area 1 on the next day, which are shown at predetermined intervals. Each of the individual power control estimation patterns is, as in the case of the power control estimation pattern shown in FIG. 2 already explained above, composed of estimated power patterns including the power consumption, the power purchase, the power generation, the charge power, the discharge power and the like.

Next, the power control estimation unit 2251 combines the individual power control estimation patterns of the respective customer facilities 10A in the power controlled area 1, and generates a power control estimation pattern for the entire power controlled area 1.

The estimated value correction unit 2252 compares a past power control estimation pattern of a past day relative to the predetermined day in the power controlled area 1 with a past actual performance pattern showing actual values of power consumption, power purchase, power generation, power charge, power discharge and the like of the same past day in the power controlled area 1, and correct the power control estimation pattern generated by the power control estimation unit 2251.

Here, the past power control estimation pattern and the past actual performance pattern which are used for the comparison with respect to the power controlled area 1 include data of a past day near the target day for estimation, such as the previous day or the same day of the week in the past, or a past day which is the same as the target day for estimation in respect of season, weather, day of the week etc.

At this time, the estimated value correction unit 2252 obtains a difference between the past power control estimation pattern in the power controlled area 1 and the past actual performance pattern in the power controlled area 1 with respect to each predetermined time interval of the predetermined day, and correct the power control estimation pattern by adding a correction value corresponding to the obtained difference to the power amount of the power control estimation pattern at the corresponding time so as to maximize the self-sufficiency.

Here, whether the self-sufficiency is maximized or not is judged on the basis of a criteria that the amount of purchased power supplied from the system power supply is minimized or the electricity charge is minimized. That is, the self-sufficiency is judged to be maximized when a ratio of the power generated by the photovoltaic module 101 in the power consumed in the power managed area 1 or the charge for the power purchased from the system power supply is minimized.

For example, the estimated value correction unit 2252 obtains a difference in the power discharge and the power charge from the system power supply with respect to the storage battery 103 between the past power control estimation pattern and the past actual performance pattern in the power controlled area 1. For simplicity, charging of the storage battery 103 from the power generated by the photovoltaic module 101 will be omitted in the following explanation. The estimated value correction unit 2252 obtains a difference in the power discharge and the power charge with respect to each predetermined time interval between the past power control estimation pattern and the past actual performance pattern of a predetermined day.

The estimated value correction unit 2252 performs a simulation for calculating the differential discharge power, the differential purchased power, the loss amount by power discharge, the loss amount by power purchase, and the total loss amount, which are values when the shift power amount is increased by 1 (Wh/min). Then, the estimated value correction unit 2252 obtains the shift power amount at which the total loss amount shown in FIG. 7 in the power controlled area 1 is minimized.

Further, the estimated value correction unit 2252 adds the obtained shift power amount as a correction value to the pattern of the discharge power in the power control estimation pattern. The estimated value correction unit 2252 stores the corrected power control estimation pattern of the next day in the storage unit 2253 together with the power control estimation pattern before the correction.

The estimated value correction unit 2252 reads and uses each of the past power control estimation pattern and the past actual performance pattern of the customer facility 10A of the predetermined day in the power controlled area 1 which are stored in the storage unit 2253.

Alternatively, as in the case of the first embodiment, the estimated value correction unit 2252 may be configured to read from the storage unit 2253 a past power control estimation pattern of a predetermined day which is the closest to the power control estimation pattern to be corrected, instead of the past power control estimation pattern of a day before the target day for estimation. The estimated value correction unit 2252 also reads the past actual performance pattern corresponding to the past power control estimation pattern of each customer facility 10A, and obtains a difference in the power from the past power control estimation pattern and the past actual performance pattern of the predetermined day.

Then, as explained for the first embodiment with reference to FIG. 8, the estimated value correction unit 2252 corrects the discharge power pattern in the power control estimation pattern, and generates a corrected power control estimation pattern.

Further, the estimated value correction unit 2252 distributes the shift power amount to the customer facilities 10A having storage batteries in the power control area 1, in accordance with the ratio of discharge power amounts in the discharge power patterns in the individual power control estimation patterns. The estimated value correction unit 2252 corrects the discharge power patterns in the individual power control estimation patterns of the customer facility 10A based on the distributed shift power amount to generate corrected individual power control estimation patterns.

In the storage unit 2253, past individual power control estimation patterns and past individual actual performance patterns of each of the customer premises 10A in the power controlled area 1 are written and stored.

The power control apparatus 200 reads out the corrected power control estimation pattern written in the storage unit 2253, controls the charge and discharge of the storage battery 103, the switching of the power line switch 105A, the operation of the inverter 104 and the operation of the power conditioning system 102 with respect to each of the customer facilities 10A, based on this corrected power control estimation pattern, and supplies the power for consumption to the load 106. When a target day for the corrected power control estimation pattern ends, the power control apparatus 200 associates the actual performance pattern corresponding to the power actually consumed by the load 106 as a past actual performance pattern with the corrected power control estimation pattern of each of the customer facilities 10A, and writes the resultant into the storage unit 2253 together with the specific date of the day to have them stored therein. Here, the control unit 107A provided per facility measures the power consumed by the load 106, the purchased power supplied from the system power supply, and the power generated by the photovoltaic module 101 at predetermined time intervals by a power sensor provided in the power line switch 105A to generate the aforementioned actual performance pattern, and transmits the actual performance pattern to the power control apparatus 200.

In the present embodiment, for generating the power control estimation pattern of a predetermined day with respect to each of the customer facilities 10A in the power controlled area 1, as in the case of the first embodiment, a shift power amount is obtained based on which the power control estimation pattern is corrected, such that the financial loss due to the electricity charge or the power purchase is minimized, depending on a difference in the power consumption at each predetermined time interval between the past power control estimation pattern and the past actual performance pattern of a past day preceding the predetermined day.

Further, in the present embodiment, the shift power amount used for correcting the power control estimation pattern is distributed to the customer facilities 10A in correspondence with the power of the corrected pattern, so as to correct the individual power control estimation patterns of the customer facilities 10A and generate corrected individual power control estimation patterns, whereby the power control of each of the customer facilities 10A is performed.

Thus, according to the present embodiment, it is possible to effectively minimize the financial loss due to the electricity charge or the power purchase, whereby the power control of the customer facilities 10A in the power controlled area 1 can be performed with improved self-sufficiency.

Further, the functions of the control unit 107 provided per facility shown in FIG. 1, the control unit 107A provided per facility shown in FIG. 10 and the power control apparatus 200 shown in FIG. 11 can be performed by a method in which a program for implementing the functions is recorded in a computer-readable recording medium, and the program recorded in this medium is loaded into a computer system and implemented, so as to perform the power control of the customer facility 10 and the customer facility 10A such that the financial loss due to the electricity charge or the power purchase can be minimized.

Herein, the "computer system" may embrace the operating system (OS) and the hardware such as peripheral devices.

The "computer system" may embrace a homepage provider environment (or a homepage display environment) when it uses a WWW system.

The "computer-readable recording medium" may encompass flexible disks, magneto-optic disks, ROM, portable media such as CD-ROM, and other storage devices such as hard-disk units installed in computers. Additionally, the "computer-readable recording medium" may encompass media which are able to dynamically retain programs for a short period of time, such as a communication line for transmitting a program via a network such as the Internet or a communication line such as a telephone line, and media which are able to retain programs for a certain period of time, such as internal volatile memory of computers acting as servers or clients involved in the transmission of the program. The aforementioned program may be one for implementing a part of the functions mentioned above, or may be one which can implement the functions when combined with a program already stored in the computer system.

Various embodiments of the present invention are explained above referring to the drawings; however, the specific configuration is not limited to those of the embodiments and may be altered as long as the alterations do not deviate from the gist of the present invention.

### DESCRIPTION OF THE REFERENCE SYMBOLS

- 1: Power controlled area
- 2: Commercial power source
- 3: System power supply
- 10,10A: Customer facility
- 101: Photovoltaic module
- 102: Power conditioning system
- 103: Storage battery
- 104: Inverter
- 105,105A: Power line switch
- 106: Load
- 107,107A: Control unit per facility
- 108,2251: Power control estimation unit
- 109,2252: Estimated value correction unit
- 110,2253: Storage unit
- 200: Power control apparatus
- 201: Network I/F unit
- 202: First power control unit
- 221: Total power calculation unit
- 222: Power distribution determination unit
- 223: Distribution control unit
- 225: Power estimation unit

## Claims

1. An electric power control system for controlling supply and consumption of electric power in a system power supply, a storage battery and an electric power load, said electric power control system comprising:
an estimated value correction unit configured to obtain a difference between a past power control estimated value and a past actual performance value, and to shift a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and
a power control unit configured to control supply and consumption of electric power in the system power supply, the storage battery, and the electric power load, based on the power control estimated value corrected by the estimated value correction unit.

2. The electric power control system according to claim 1, wherein the estimated value correction unit is configured to obtain a difference between the past power control estimated value and the past actual performance value with respect to each of the predetermined periods, and correct the power control estimated value, such that the corrected value satisfies a predetermined evaluation value.

3. The electric power control system according to claim 1 or 2, wherein each of the past power controls estimated value and the past actual performance value is a value of one day before a day including the predetermined period.

4. The electric power control system according to claim 1 or 2, wherein the past power control estimated value and the past actual performance value are values of the same day of week in the past as a day including the predetermined period.

5. The electric power control system according to any one of claims 1 to 4, wherein the power control estimated value is an amount of power discharged to the storage battery in each predetermined period.

6. The electric power control system according to any one of claims 1 to 4, which further comprises a power generator, wherein the power control estimated value includes an amount of power charged to the storage battery from a power generated by the power generator at each predetermined period.

7. The electric power control system according to any one of claims 1 to 4, which further comprises a power generator, wherein the power control estimated value is an amount of power generated by the power generator in each predetermined period.

8. The electric power control system according to any one of claims 1 to 4, wherein the power control estimated value is an amount of power consumed by the electric power load in each predetermined period.

9. The electric power control system according to any one of claims 1 to 4, wherein the power control estimated value is an amount of power purchased from the system power supply in each predetermined period.

10. The electric power control system according to any one of claims 1 to 4, wherein the power control estimated value is an amount of power charged and discharged with respect to the storage battery, an amount of power generated by the power generator, an amount of power consumed by the electric power load, or an amount of power purchased from the system power supply, in each predetermined period.

11. The electric power control system according to any one of claims 1 to 10, which controls supply and consumption of electric power with respect to a customer facility having the storage battery and the electric power load as electrical equipment.

12. The electric power control system according to any one of claims 1 to 10, which controls supply and consumption of electric power with respect to a group including a customer facility having the storage battery and the electric power load as electrical equipment and another customer facility not having the storage battery as electrical equipment.

13. An electric power control method for controlling an electric power control system for controlling supply and consumption of electric power in a system power supply, a storage battery and an electric power load, said method comprising:
an estimated value correction step of causing an estimated value correction unit to obtain a difference between a past power control estimated value and a past actual performance value, and to shift a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and
a power control step of causing a power control unit to control supply and consumption of electric power in the system power supply, the storage battery, and the electric power load, based on the power control estimated value corrected by the estimated value correction unit.

14. A computer grogram for causing a computer to execute operations of an electric power control system for controlling supply and consumption of electric power in a system power supply, a storage battery and an electric power load, said computer grogram causing the computer to execute:
an estimated value correction by obtaining a difference between a past power control estimated value and a past actual performance value, and shifting a power control estimated value obtained as a result of estimation in a predetermined period to an extent corresponding to said difference, thereby correcting the power control estimated value, wherein said past power control estimated value is a value obtained as a result of estimation performed in a past time relative to said predetermined period, and said past actual performance value is a value obtained as an actual result in the past time; and
a power control by controlling supply and consumption of electric power in the system power supply, the storage battery, and the electric power load, based on the power control estimated value corrected by the estimated value correction.
